# EUROPEAN PATENT SPECIFICATION

(11) **EP 3 015 206 B1**
(45) Date of publication and mention of the grant of the patent: **16.01.2019**
(21) Application number: 14818679.4
(22) Date of filing: 20.06.2014
(51) Int. Cl.: B23D 65/00, B23D 61/02

(54) **METHOD FOR MANUFACTURING A TIPPED CIRCULAR SAW BLADE**
VERFAHREN ZUR HERSTELLUNG EINER KREISSÄGE MIT HARTER SPITZE
PROCÉDÉ POUR LA FABRICATION DE SCIE CIRCULAIRE AVEC UNE POINTE DURE

(30) Priority: 24.06.2013 JP 2013131507
(43) Date of publication of application: 04.05.2016
(73) Proprietor: KANEFUSA KABUSHIKI KAISHA, Niwa-gun, Aichi-ken 480-0192 (JP)
(72) Inventor: FUJIWARA, Tsugunori, Niwa-gun Aichi 480-0192 (JP); IINUMA, Tomoyuki, Niwa-gun Aichi 480-0192 (JP)
(74) Representative: Kuhnen & Wacker Patent- und Rechtsanwaltsbüro PartG mbB
(86) International application number: PCT/JP2014/003332
(87) International publication number: WO 2014/208068

(56) References cited:
- EP-A1- 1 591 184
- JP-A- H01 135 413
- JP-A- H02 194 159
- JP-A- H02 194 159
- JP-A- S62 277 216
- JP-A- 2011 067 903
- JP-A- 2012 211 396
- JP-A- 2012 211 396
- US-A- 3 971 113
- US-A1- 2006 156 892
- US-A1- 2010 126 326
- US-B1- 6 505 537

## Description

### Technical Field

The present invention relates to a method for manufacturing a tipped circular saw blade according to the preamble of claim 1, which is formed by fixing cutting edge tips to a disk-shaped metal base by welding and used for cutting a variety of materials such as metal, wood, plastic, and ceramics or other purposes, and particularly to a method for manufacturing a tipped circular saw blade whose cutting edges coated with hard coating film.

### Background Art

As an example of a conventional method for manufacturing such a tipped circular saw blade, Japanese Unexamined Patent Application Publication No. H11-239,915 discloses a method for manufacturing a disk-shaped tool comprising brazing tips formed of cemented carbide, cermet, an abrasion-resistant casting alloy or the like to a disk-shaped base plate (a metal base) of steel and then coating the tips by a physical vapor deposition process (hereinafter referred to as a PVD process). In this manufacturing method, steps of producing a disk-shaped base plate, brazing a number of tips to the disk-shaped base plate, grinding the tips, and coating the tips with abrasion-resistant coating film are sequentially carried out. Grinding of the tips after the tips are brazed to the base plate reduces height differences of the large number of tips and secures a highly accurate cutting performance of the disk-shaped tool. This is why production is carried out in the above sequence of steps, and change in the order of steps or simultaneous execution of some of these steps is impossible. As a result, in the above manufacturing method, a sum of production time of each of the four steps is necessary and production costs are high. Besides, production time cannot be drastically reduced.

Moreover, coating of the tips with the abrasion-resistant film is carried out by a PVD process, and in a case of a large-diameter circular saw blade, for example, having an outer diameter of 500 mm or more and a weight of 10 kg or more, a PVD device and a pretreatment device which are large enough for the circular saw blade are necessary. In this way, production of a large-diameter circular saw blade is sometimes restricted by the size of the PVD device. In such a case, it is necessary to prepare a PVD device large enough for the diameter of the circular saw blade, but such a PVD device is very expensive. Therefore, depending on the volume of production, financial burden of device costs is very high. Furthermore, in a case of such a large-diameter circular saw blade, great efforts are necessary to apply coating pretreatment and to place the circular saw blade in devices for coating, so production costs increase even more.

Because, in coating, a disk-shaped base plate is greatly deformed or buckled by a relatively small thermal stress, it is difficult to form a coating film which is good both in film quality and adhesion. That is to say, coating film formation needs to hold a part to be coated at a treatment temperature of several hundreds deg. C, but in such a high-temperature treatment, due to thermal stress caused by non-uniform temperature distribution in the disk-shaped base plate, the disk-shaped base plate undergoes high-temperature plastic deformation, and this deformation remains as distortion. Therefore, the disk-shaped base plate cannot be subjected to a high-temperature treatment. On the other hand, if a coating treatment is applied so as not to cause distortion, then a coating film with good quality and adhesion cannot be obtained. Once residual distortion thus occurs in a disk-shaped base plate, correction of the distortion is almost impossible or takes so much efforts, so the disk-shaped base plate cannot be put in practical use. It has been confirmed that such distortion is likely to occur when a disk-shaped base plate has a relatively small base plate thickness t [mm] with respect to a diameter D [mm]. A problem occurs when a disk-shaped base plate has a thickness t of 3.7 × (1/10⁵) × D² [mm] or less.

Moreover, in the above production method, the hard coating film is coated on vicinities of the tips after the tips are welded to the disk-shaped base plate by brazing or the like. Therefore, coating treatment temperature needs to be lower than brazing temperature and accordingly, a restriction is imposed on characteristics of the hard coating film such as heat resistance, durability and abrasion resistance. Moreover, it is impossible to employ a coating method which uses a higher coating treatment temperature than brazing temperature, such as a chemical vapor deposition process (hereinafter referred to as a CVD process).

Further, patent document US 2010/0126326 A1 discloses a circular saw blade with a substantially circular body having a plurality of protruding tip support regions spaced around the periphery thereof, each tip support region including at least a seat for supporting a cutting tip. The tip support region may further include a substantially planar upper tooth face, a grindable tip reinforcement portion and/or a lower tip angle less than 90 degrees. A cutting tip is secured to the seat of each tip support region preferably with a top face of each cutting tip substantially parallel to and offset from an upper tooth face of each tip support region. Each cutting tip of the circular saw blade is further configured to maintain a cutting edge at a substantially constant width when material is removed from the top face thereof. A method of manufacturing a saw blade is also provided.

Moreover, patent document US 6, 505, 537 B1 discloses a cutting tool for separating and formatting of sheet materials has a rotationally driven support body having cutting teeth arranged about a circumference of the support body. The cutting teeth have a tooth profile with a radially outwardly positioned front-cutting area with a separating cutting edge and a formatting area with main cutting edges determining the cutting width of the cutting tool. The tooth profile further has a transition area located radially between the front-cutting area and the formatting area. The main cutting edges in the formatting area are arranged radially separately from the separating cutting edges of the front-cutting area by the transition area, wherein the transition area has transition cutting edges adjoining the cutting edges and angled relative to the separating cutting edges toward a radial center axis of the cutting tool. The front-cutting area is symmetrical relative to the radial center axis of the cutting tool.

Patent document US 2006/0156892 A1 discloses a blade or disk for a rotary or circular saw having cutting teeth on the periphery of the blade, wherein some of the teeth are of a more costly, aggressive, or long wearing material such as polycrystalline diamond and some of the teeth are of a less costly, aggressive or long wearing material such as tungsten carbide, and where such teeth may be fabricated in different configurations.

Further, patent document JP H01 135413 A describes that a tipped saw is widened in a cutting edge part to a slope to connect a top edge of the cutting edge part with an outside edge of its bottom to form a fixing part for a tip. On the other hand, the tip is provided with a fixing groove corresponding to the fixing part on the side of a fixing edge, and the fixing groove is formed into a sloping groove to make it correspond to the fixing part. In fixing the tip, the fixing part is inserted into the fixing groove to braze the tip on the cutting edge part with the fixing part sandwiched in the fixing groove of the tip.

### Summary of Invention

### Technical Problem

The present invention has been made to solve these problems. It is an object of the present invention to provide a manufacturing method capable of reducing production time for producing a tipped circular saw blade having cutting edge tips fixed by welding to teeth formed on a disk-shaped metal base and having cutting edges coated with hard coating film, and capable of providing a tipped circular saw blade having good heat resistance, durability and abrasion resistance at low costs.

### Solution to Problem

The above object is solved by the subject-matter of claim 1. Further advantageous configurations of the invention can be drawn from the dependent claims.

A method of the present invention comprises a first step of forming a disk-shaped metal base of steel, a second step of producing cutting edge tips, a third step of coating at least cutting edges of the cutting edge tips with hard coating film, and a fourth step of fixing the cutting edge tips coated with the hard coating film by welding to teeth formed on the metal base, the hard coating film being of one material selected from the group consisting of a first material comprising one of nitrides, oxides and oxynitrides containing at least one of Al, Ti, and Cr, a second material comprising the first material containing at least one of Si, V, Ni, Y, Zr, Nb, Mo, Ta and W, a third material comprising the first material containing at least one of B and C, and a fourth material comprising the second material containing at least one of B and C.

It should be noted that the hard coating film can be of a first material comprising one of 21 kinds of materials which are AlN, TiN, CrN, AlTiN, AlCrN, TiCrN, and AlTiCrN as nitrides of Al, Ti, Cr, AlTi, AlCr, TiCr, and AlTiCr; AlO, TiO, CrO, AlTiO, AlCrO, TiCrO, and AlTiCrO as oxides of Al, Ti, Cr, AlTi, AlCr, TiCr, and AlTiCr; and AlNO, TiNO, CrNO, AlTiNO, AlCrNO, TiCrNO, and AlTiCrNO as oxynitrides of Al, Ti, Cr, AlTi, AlCr, TiCr, and AlTiCr. However, upon appropriately selecting the second material, the third material or the fourth material, which are based on the first material, in accordance with characteristics of a material to be cut, a circular saw blade attains suitable heat resistance, abrasion resistance, durability, etc. for the material to be cut and can exhibit appropriately improved cutting performance. Examples of a welding method include brazing, resistance welding, welding by irradiation of a high-energy beam such as a laser beam.

In the present invention constructed as mentioned above, the first step can be carried out independently of the second step and the third step, and the cutting edge tips coated with the hard coating film produced in the second step and the third step can be fixed by welding in the fourth step to the teeth of the metal base formed in the first step. As a result, in the present invention, production time can be drastically reduced and production management is facilitated, so production costs of the circular saw blade can be reduced when compared to in a conventional production method. Moreover, in the present invention, the cutting edge tips which have been ground and coated with the hard coating film are welded to the metal base. Therefore, the size of a coating device for forming hard coating film and the size of a pretreatment device are irrelevant to the size of the diameter of the circular saw blade. Therefore, in the present invention, production of the circular saw blade is achieved regardless of the size of the diameter. Besides, since the coating device and the like do not need to be particularly large-scale expensive ones, excessively great equipment investment in these devices are not necessary.

Moreover, in the present invention, the third step of coating the cutting edges of the cutting edge tips with the hard coating film can be carried out before the fourth step of fixing the cutting edge tips coated with the hard coating film by welding to the teeth formed on the metal base. Therefore, temperature for forming the hard coating film can be higher than welding temperature and as a result, cutting edge tips having good heat resistance, durability and abrasion resistance can be obtained.

Preferably, the hard coating film has an oxidation starting temperature of 800 deg. C or more. With an oxidation starting temperature of 800 deg. C or more, the hard coating film is suppressed from degrading in a brazing step and as a result, the hard coating film appropriately secures heat resistance, durability and abrasion resistance of the cutting edge tips. Oxidation starting temperature is measured by differential scanning calorimetry.

Furthermore, the hard coating film can be formed by a PVD process. Since a PVD device accommodates not the circular saw blade in itself but the cutting edge tips, the PVD process can be suitably employed.

In addition, according to the present invention, part of both side faces of each one of the cutting edge tips are provided with parts parallel to each other, or parts slanted to depart from each other as they go in an opposite direction to a cutting edge of the cutting edge tip. When part of both non-parallel side faces of each one of the cutting edge tips having a radial clearance angle and/or a tangential clearance angle are provided with faces parallel to each other and the cutting edge tip is pressed against and welded to the tooth, the cutting edge tip can be stably clamped by the parallel faces and therefore can be pressed against the tooth with a high positioning accuracy. On the other hand, when part of both the non-parallel side faces are provided with parts slanted to depart from each other as they go in an opposite direction to a cutting edge of the cutting edge tip, the cutting edge tip clamped by the slanted parts is strongly pressed toward the tooth and therefore can be pressed against the tooth with a high positioning accuracy. As a result, in the present invention, the cutting edge tip can be welded to the tooth with high accuracy, and a circular saw blade having minimum height differences of the plurality of tips, that is to say, the circular saw blade with a high cutting performance can be produced with ease. It should be noted that even if the tips are not coated by omitting the third step, similar effects to the abovementioned ones can be obtained in the present invention.

Furthermore, the base metal can have a thickness of 3.7 × (1/10⁵) × D² [mm] or less, where D is a diameter [mm] of the base metal. Since the metal base in itself is not held at a coating treatment temperature of about several hundreds deg. C in the present invention, even a metal base having a small thickness of 3.7 × (1/10⁵) × D² [mm] or less does not suffer from residual strain caused by high-temperature plastic deformation. Therefore, rigidity of the base metal can be appropriately secured.

In the present invention, the first step can be carried out independently of the second step and the third step, and then the fourth step can be carried out. Therefore, production time can be drastically reduced and production costs can be reduced when compared to those of a conventional production method. Moreover, hard coating film can be formed by employing a PVD process regardless of the size of the circular saw blade. Furthermore, since the third step of coating the cutting edges of the cutting edge tips with the hard coating film can be carried out before the fourth step of fixing the cutting edge tips coated with the hard coating film by welding to the teeth formed on the metal base, temperature for forming the hard coating film can be higher than welding temperature and as a result, the circular saw blade with highly heat-resistant, durable, and abrasion-resistant cutting performance can be obtained.

Moreover, according to the invention, parts of both non-parallel side faces of each one of the cutting edge tips having a radial clearance angle and/or a tangential clearance angle are provided with parts parallel to each other or slanted parts. Therefore, when the cutting edge tip is pressed against and welded to the tooth, the cutting edge tip can be pressed against the tooth with a high positioning accuracy. As a result, the circular saw blade having minimum height differences of the plurality of tips, that is, the circular saw blade with a high cutting performance can be obtained.

### Brief Description of Drawings

Fig. 1 is a schematic front view of a tipped circular saw blade according to an example of the present invention.
Fig. 2 is a partially enlarged front view showing part of a metal base of the tipped circular saw blade to which cutting edge tips are brazed.
Fig. 3 is a partially enlarged front view showing part of the metal base before the cutting edge tips are fixed to the metal base by brazing.
Figs. 4(a), 4(b), and 4(c) are a plan view, a left side view and a front view of a cutting edge tip (a hard coating film not shown), respectively.
Figs. 5(a), 5(b), and 5(c) are a plan view, a left side view and a front view of a cutting edge tip according to Modified Example 1, respectively.
Figs. 6(a), 6(b), and 6(c) are a plan view, a left side view and a front view of a cutting edge tip according to Modified Example 2, respectively.
Figs. 7(a), 7(b), and 7(c) are a plan view, a left side view and a front view of a cutting edge tip according to Modified Example 3, respectively.
Figs. 8(a), 8(b), and 8(c) are a plan view, a left side view and a front view of a cutting edge tip according to Modified Example 4, respectively.
Fig. 9 is a schematic front view of a tipped circular saw blade produced by a conventional manufacturing method.
Fig. 10 is a partially enlarged front view of the tipped circular saw blade shown in Fig. 9.
Figs. 11(a), 11(b), 11(c) are a plan view, a left side view and a front view of a conventional cutting edge tip, respectively.

### Description of Embodiments

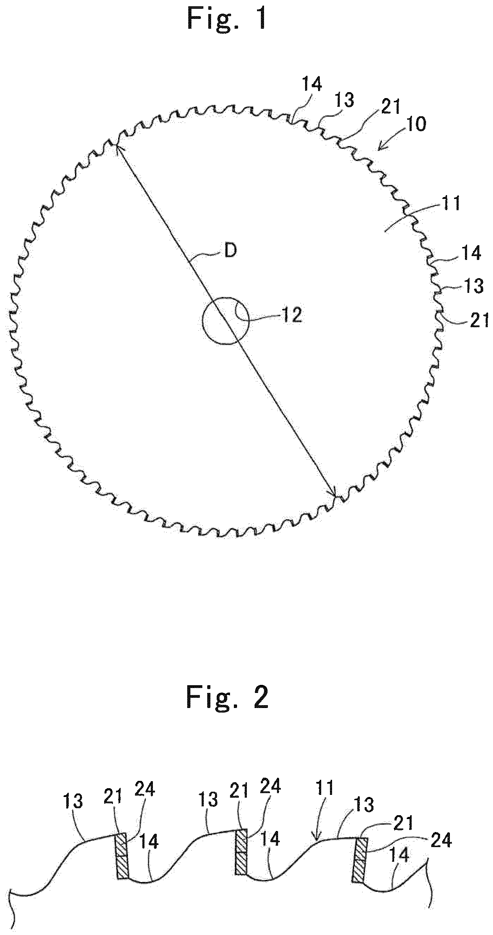

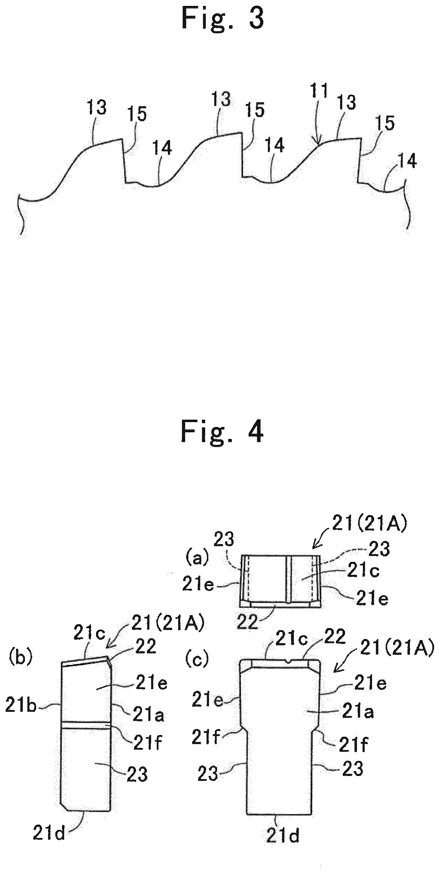

Hereinafter, embodiments of the present invention will be described with reference to drawings. Fig. 1 is a front view of a tipped circular saw blade (hereinafter referred to as a circular saw blade) 10 according to an example. Figs. 2 and 3 are partially enlarged front views of the circular saw blade 10 and a metal base 11. The metal base 11 constituting the circular saw blade 10 is a thin disk-shaped plate of steel, and has a central hole 12 into which a rotary shaft of machining equipment is inserted. At an outer periphery of the metal base 11, a number of roughly quadrangular teeth 13 protrude radially at circumferentially even intervals, and gullets 14 relatively recede radially between the teeth 13. On a leading edge side of the teeth 13 in a forward direction of rotation, a number of mounting seats 15 are formed by being cut out at a roughly right angle for mounting cutting edge tips 21.

The cutting edge tips 21 are welded on the mounting seats 15 by brazing or the like. As shown in Figs. 4, each one of the cutting edge tips 21 is formed of a hard material such as cemented carbide and has an elongated roughly rectangular parallelepiped shape body which can be in close contact with a mounting seat 15. In the cutting edge tip 21, a front face (a second rake face) 21a and a rear face 21b are parallel to each other, an upper face (a flank face) 21c is a surface slanted at a top clearance angle, and a bottom face 21d forms a right angle with the front face 21a. A cutting edge 22 is formed between the upper face 21c and a first rake face or rake faces located at both ends of the first rake face. Both side faces 21e of the cutting edge tip 21 extending in a width direction of the cutting edge tip 21 have parts which are slanted at a predetermined radial clearance angle in a direction from the upper face 21c toward the bottom face 21d, stepped parts 21f which are located at intermediate positions and slightly recede in the width direction, and parallel parts 23 which extend from the stepped parts 21f toward the bottom face 21d and are parallel to each other.

After the abovementioned outer shape is formed by grinding, the cutting edge tip 21 is brazed on the mounting seat 15. The cutting edge tip 21 has a hard coating film 24 of AlTiCrN having good heat resistance, durability and abrasion resistance as a first material and formed by a cathode arc PVD process, which is a PVD process. The hard coating film 24 is not shown in Figs. 4. The hard coating film 24 formed on the rear face 21b and the bottom face 21d, which are surfaces to be welded on the mounting seat 15 at the time of brazing, is removed by grinding in order to increase welding strength after the hard coating film 24 is formed. Removal of the hard coating film 24 can also be carried out by shot blasting, etc. Formation of the hard coating film 24 on faces of the cutting edge tip 21 which do not need to be coated can be prevented by masking only these faces in forming the hard coating film 24.

Next, a method for manufacturing a circular saw blade according to this example will be described.

The metal base 11 is formed by cutting an ordinary steel plate or the like, for example, so as to have an outer diameter of 750 mm, a thickness of 3.2 mm and seventy-two teeth 13 (a first step). Independently of formation of the metal base 11, as shown in Figs. 4, the cutting edge tips 21 are formed as grinding tips 21A having an elongated roughly rectangular parallelepiped shape and a thickness of 4.8 mm by using a grinding machine (a second step) . This grinding machine is used for grinding cutting edge tips as simple bodies, and therefore, does not need to be a large-scale one, unlike a conventional machine for grinding cutting edge tips mounted on the metal base 11. Besides, although it is compact, this grinding machine can grind cutting edge tips of circular saw blades with different outer diameters.

Next, the grinding tips 21A formed by grinding are coated with the hard coating film 24 comprising AlTiCrN by using a cathode arc PVD device (a third step). After the hard coating film 24 is formed, the hard coating film 24 formed on the rear faces 21b and the bottom faces 21d, which are surfaces to be joined with the mounting seats 15 at the time of brazing, is removed by grinding. The cutting edge tips 21 are fixed on the mounting seats 15 formed on the teeth 13, respectively, by brazing using a silver solder alloy or the like (a fourth step). In brazing, while parallel parts 23 are pinched by a clamping tool not shown from both sides, each one of the cutting edge tips 21 is pressed against and brazed to a tooth 13. Owing to this, the large number of cutting edge tips 21 are placed on the mounting seats 15 with a high positioning accuracy. Therefore, height differences of the respective cutting edge tips 21 are kept small, and the circular saw blade 10 with a high cutting performance is provided.

As described above, in this example, the first step of forming the metal base 11 can be carried out independently of the second step of forming an outer shape of the cutting edge tips 21 and the third step of coating the cutting edge tips 21 with the hard coating film 24. The cutting edge tips 21 coated with the hard coating film 24 produced in the second step and the third step can be fixed by brazing in the fourth step on the mounting seats 15 of the metal base 11 formed in the first step. As a result, in this example, production time can be drastically reduced and production management is facilitated, so production costs of the circular saw blade 10 can be reduced when compared to in a conventional method.

Moreover, in this example, the cutting edge tips 21 ground and coated with the hard coating film 24 in the second step and the third step are fixed by brazing on the mounting seats 15 of the teeth 13 in the fourth step. Therefore, the size of a PVD device for forming the hard coating film 24 and the size of a pretreatment device are irrelevant to the size of the diameter of the circular saw blade 10. Accordingly, in this example, the circular saw blade 10 can be produced regardless of the size of the diameter. In addition, the PVD device and the like do not need to be especially large-scale expensive ones, so excessively high investment in these devices is not necessary. Moreover, in this example, in coating the grinding tips 21A with the hard coating film 24, the PVD device needs to accommodate not the circular saw blade 10 in itself but only the grinding tips 21A, and can perform coating treatment on a large number of tips. Therefore, efforts for pretreatment of the metal base 11 and placement of the PVD device are drastically reduced. Accordingly, formation of the hard coating film 24 is even more facilitated and work efficiency in forming the hard coating film 24 is increased. As a result, production costs are further reduced.

Moreover, in this example, the third step of coating the cutting edge tips 21 with the hard coating film 24 can be carried out before the fourth step of fixing the cutting edge tips 21 coated with the hard coating film 24 on the mounting seats 15 by brazing. Therefore, temperature for forming the hard coating film 24 can be higher than brazing temperature, and accordingly, the circular saw blade 10 having the cutting edge tips 21 with high heat resistance, durability, and abrasion resistance can be obtained. Moreover, having good heat resistance and the like, the hard coating film 24 can reduce adverse thermal effect of brazing temperature on the cutting edge tips 21. Moreover, in this example, the hard coating film 24 has an oxidation starting temperature of 800 deg. C or more and can exhibit high performance with high heat resistance, durability and abrasion resistance, so the hard coating film 24 secures heat resistance, durability and abrasion resistance of the cutting edge tips 24. Moreover, since temperature for forming the hard coating film 24 can be higher than brazing temperature, the hard coating film 24 can be formed by using a CVD process or other film forming processes employing high treatment temperature instead of the PVD process. If coating film is formed by a CVD process after brazing in a conventional case, a metal base is deformed and a produced circular saw blade cannot be put in commercial use.

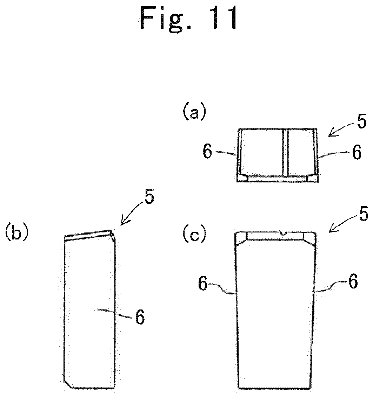

Moreover, in this example, in brazing, while parallel parts 23 are pinched by a clamping tool not shown from both sides, each one of the cutting edge tips 21 is pressed against and brazed to the tooth 13. Owing to this, the cutting edge tip 21 is placed on a mounting seat 15 with a high positioning accuracy. Therefore, height differences of the respective cutting edge tips 21 are kept small and the circular saw blade 10 with a high cutting performance is provided. If entire side faces 6 are slanted at a predetermined radial clearance angle and also at a tangential clearance angle in a thickness direction as in a conventional cutting edge tip 5 shown in Figs. 11, the cutting edge tip 5 cannot be stably clamped by a clamping tool, and therefore a variation arises in pressing the cutting edge tip 5 against a mounting seat. As a result, height differences of a great number of cutting edge tips 5 may be remarkably great and cutting performance of a circular saw blade 1 as produced may be impaired. Therefore, if the conventional cutting edge tip 5 is employed in this example, corrective processing is necessary after the tip 5 is brazed to the tooth 13. In this example, however, height differences of the cutting edge tips 21 after welded are kept sufficiently small, so grinding work after welding is not necessary.

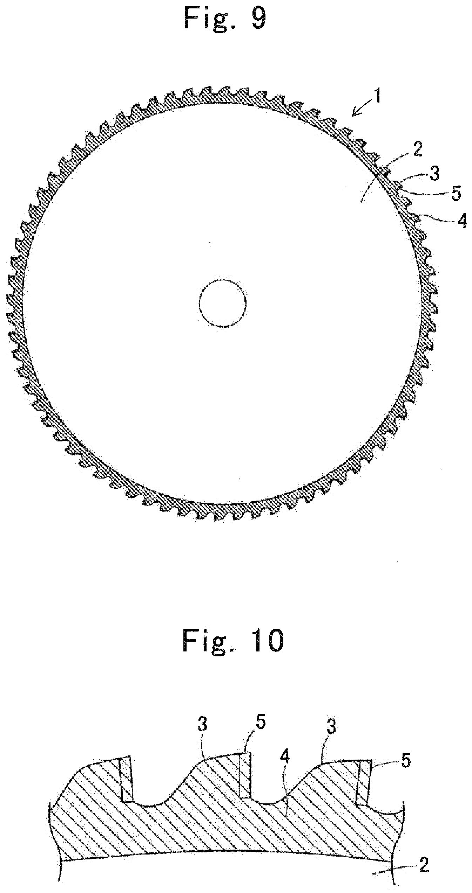

Moreover, in this example, only the cutting edge tips 21 are coated with the hard coating film 24, as shown in Figs. 1 and 2. Therefore, outer appearance is great when compared to that of the conventional circular saw blade 1 in which hard coating film 4 is formed in an annular shape so as to include teeth 3 located at an outer periphery of a metal base 2 and cutting edge tips 5 welded to the teeth 3, as shown in Figs. 9 and 10. Besides, in this example, the metal base 11 in itself is not coated with the hard coating film 24, or held at a coating treatment temperature of about several hundreds deg. C. Therefore, even a metal base 11 having a large outer-diameter D of 750 mm can have a small thickness of about 3.7 × (1/10⁵) × D² [mm] or less, e.g., about 3.2 mm. Even when the metal base 11 has a small thickness of 3.2 mm, rigidity of the base metal 11 can be appropriately secured because distortion due to high-temperature plastic deformation does not remain in the metal base 11. Moreover, in this example, edge sharpening of the cutting edge tips 21 by using a grinding stone is not carried out after the cutting edge tips 21 are brazed to the metal base 11. Therefore, there is no risk that grinding stone mark left on the metal base 11 may harm outer appearance or performance of the metal base 11.

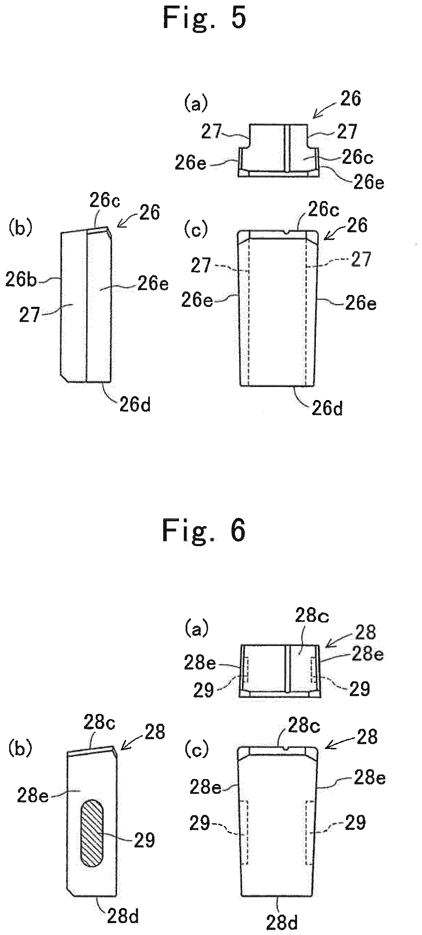

Next, cutting edge tips 26 according to Modified Example 1 will be described with reference to Figs. 5. Each one of the cutting edge tips 26 has almost the same outer shape as those of the abovementioned cutting edge tips 21, but both side faces 26e are slanted at a predetermined radial clearance angle in a direction from an upper face 26c toward a bottom face 26d. Furthermore, part of both the side faces 26e between intermediate positions in a thickness direction and a rear face 26b are parallel parts 27 which slightly recede in a width direction and are parallel to each other. While the parallel parts 27 are tightly pinched by a clamping tool not shown from both sides, the cutting edge tip 26 is pressed against and brazed to a tooth 13. As a result, also in Modified Example 1, the cutting edge tip 26 is placed on a mounting seat 15 with a high positioning accuracy, so height differences of the respective cutting edge tips 26 are kept small and the circular saw blade 10 with a high cutting performance is provided.

Next, cutting edge tips 28 according to Modified Example 2 will be described with reference to Figs. 6. Each one of the cutting edge tips 28 has almost the same outer shape as those of the abovementioned cutting edge tips 26 and both entire side faces 28e are slanted at a predetermined radial clearance angle as they go from an upper face 28c toward a bottom face 28d. Moreover, part of both the side faces 28e at intermediate positions between the upper face 28c and the bottom face 28d are provided with parallel recessed parts 29 which are recessed in the shape of a hole elongated in a direction connecting the upper face 28c and the rear face 28d and which have recessed faces in parallel to each other. While the parallel recessed parts 29 are tightly pinched by a clamping tool not shown from both sides, the cutting edge tip 28 is pressed against and brazed to a tooth 13. As a result, also in Modified Example 2, the cutting edge tip 28 is placed on a mounting seat 15 with a high positioning accuracy, so height differences of the respective cutting edge tips 28 are kept small and the circular saw blade 10 with a high cutting performance is provided.

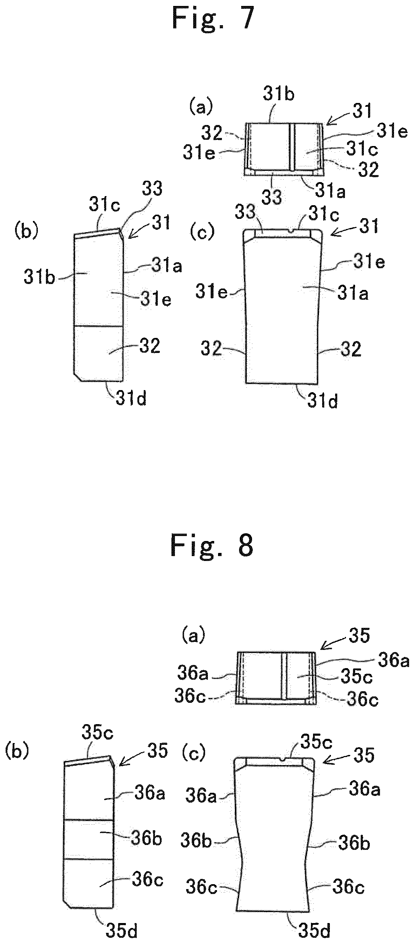

Next, cutting edge tips 31 according to Modified Example 3 will be described with reference to Figs. 7. Each one of the cutting edge tips 31 has a similar outer shape to those of the abovementioned cutting edge tips 21 and part of both side faces 31e between an upper face 31c and intermediate positions of the upper face 31c and a bottom face 31d are slanted at a predetermined radial clearance angle. Moreover, both the side faces 31e are slanted from a front face 31a toward a rear face 31b at a predetermined tangential clearance angle. Part of both the sides faces 31e between the intermediate positions and the bottom face 31d are slanted parts 32 which are slanted in an opposite direction to the radial clearance angle, that is, to depart from each other as they go in an opposite direction to a cutting edge 33.

When the cutting edge tip 31 is provided with these slanted parts 32 and clamped by a clamping tool not shown by the slanted parts 32 and pressed toward a mounting seat 15, because the slanted parts 32 have inclinations in an opposite direction to a pressing direction, the clamping tool is firmly engaged with the slanted parts 32. Therefore, since the cutting edge tip 31 is strongly pressed against the mounting seat 15, the cutting edge tip 31 can be pressed against a tooth 13 with a high positioning accuracy. As a result, in Modified Example 3 as well as the above examples, the cutting edge tip 31 can be brazed to the tooth 13 while placed with a high positioning accuracy, so height differences of a large number of cutting edge tips 31 are suppressed to minimum and a circular saw blade with a high cutting performance is provided with ease.

Next, cutting edge tips 35 according to Modified Example 4 will be described with reference to Figs. 8. Each one of the cutting edge tips 35 has a similar outer shape to those of the above cutting edge tips 31, but both sides are divided into three sections of first side parts 36a, second side parts 36b and third side parts 36c located in this order in a direction from an upper face 35c toward a bottom face 35d. The first side parts 36a are slanted at a predetermined radial clearance angle. The second side parts 36b connected to the first side parts 36a are slanted at a slightly larger angle than the radial clearance angle in the same direction. The third side parts 36c are slanted to widen in opposite directions to the directions of the inclinations of the second side parts 36b in terms of a width direction.

When the cutting edge tip 35 is provided, on a side of the bottom face 35d, with the third side parts 36c which depart from each other as they go in opposite directions to the first side parts 36a and the second side parts 36b and clamped by a clamping tool not shown by the third side parts 36c and pressed toward the mounting seat 15, the third side parts 36c have inclinations in an opposite direction to a pressing direction. Therefore, the clamping tool is firmly engaged with the third side parts 36c and strongly presses the cutting edge tip 35 against the mounting seat 15, so the cutting edge tip 35 is brazed while pressed against the tooth 13 with a high positioning accuracy. As a result, in Modified Example 4 as well as Modified Example 3, the cutting edge tip 35 can be brazed while placed with a high positioning accuracy, so height differences of a large number of cutting edge tips 35 are suppressed to minimum and a circular saw blade with a high cutting performance is provided with ease.

In the above examples, the production methods including the first to fourth steps have been described. However, the third step of coating at least cutting edges of cutting edge tips with hard coating film can be omitted, if necessary. Even when the third step is omitted and the cutting edge tips are not coated with the hard coating film (not according to the invention), similar advantageous effects to those described above can be obtained.

It should be noted that in the above examples, the material of the cutting edge tips is not limited to cemented carbide, and can be cermet, high-speed steel, Stellite, various kinds of ceramics, etc. The cutting edge tips can be ground, left as it is after sintered, or treated with shot blasting. Moreover, although AlTiCrN is employed as hard coating film in the examples, a material can be appropriately selected with use of a circular saw blade from the abovementioned first, second, third and fourth materials. Furthermore, although the cutting edge tips are welded by brazing in the examples, resistance welding, high-power beam welding such as laser welding, etc. can be employed instead of brazing. The abovementioned examples are just examples and various modifications may be made without departing from the present invention as defined by the claims.

## Claims

1. A method for manufacturing a tipped circular saw blade, comprising a first step of forming a disk-shaped metal base (11) of steel, a second step of producing cutting edge tips (21; 26; 28; 31; 35), a third step of coating at least cutting edges of the cutting edge tips (21; 26; 28; 31; 35) with hard coating film (24), and a fourth step of fixing the cutting edge tips (21; 26; 28; 31; 35) coated with the hard coating film (24) by welding to teeth (13) formed on the metal base (11), the hard coating film (24) being of one material selected from the group consisting of a first material comprising one of nitrides, oxides and oxynitrides containing at least one of Al, Ti, and Cr, a second material comprising the first material containing at least one of Si, V, Ni, Y, Zr, Nb, Mo, Ta and W, a third material comprising the first material containing at least one of B and C, and a fourth material comprising the second material containing at least one of B and C,
**characterized in that** part of both side faces (21e; 26e; 28e; 31e; 36a, 36b, 36c) of each one of the cutting edge tips (21; 26; 28; 31; 35) are provided with parts (23; 27; 29) parallel to each other or parts (32; 36c) slanted to depart from each other as they go in an opposite direction to a cutting edge of the cutting edge tip (21; 26; 28; 31; 35), wherein both side faces (21e; 26e; 28e; 31e; 36a, 36b, 36c) have a side-face radial clearance angle or a side-face tangential clearance angle, and the cutting edge tips (21; 26; 28; 31; 35) are welded to the teeth (13) with the parallel parts (23; 27; 29) or the slanted parts (32; 36c) pinched by a clamping member.

2. The method for manufacturing a tipped circular saw blade according to claim 1, wherein the hard coating film (24) has an oxidation starting temperature of 800 deg. C or more.

3. The method for manufacturing a tipped circular saw blade according to claim 2, wherein the hard coating film (24) is coated by a physical vapor deposition process.

4. The method for manufacturing a tipped circular saw blade according to any one of claims 1 to 3, wherein the base metal has a thickness of 3.7 × (1/10⁵) × D² [mm] or less, where D is a diameter [mm] of the base metal.

## Patentansprüche

1. Verfahren zum Herstellen eines bestückten Kreissägeblattes, aufweisend einen ersten Schritt zum Ausbilden einer scheibenförmigen Metallbasis (11) aus Stahl, einen zweiten Schritt zum Erzeugen von Schneidkantespitzen (21; 26; 28; 31; 35), einen dritten Schritt zum Beschichten zumindest von Schneiden der Schneidkantespitzen (21; 26; 28; 31; 35) mit einem Hartbeschichtungsfilm (24), und einen vierten Schritt zum Befestigen der Schneidkantespitzen (21; 26; 28; 31; 35), die mit dem Hartbeschichtungsfilm (24) beschichtet sind, durch Verschweißen mit Zähnen (13), die auf der Metallbasis (11) ausgebildet sind, wobei der Hartbeschichtungsfilm (24) von einem Material ist, das ausgewählt ist aus der Gruppe bestehend aus einem ersten Material, das Nitride, Oxide und Oxinitride aufweist, die zumindest eines von Al, Ti und Cr enthalten, einem zweiten Material, das das erste Material aufweist, das zumindest eines von Si, V, Ni, Y, Zr, Nb, Mo, Ta und W enthält, einem dritten Material, das das erste Material aufweist, das zumindest eines von B und C enthält, einem vierten Material, das das zweite Material aufweist, das zumindest eines von B und C enthält, **dadurch gekennzeichnet, dass** ein Teil von beiden Seitenflächen (21e; 26e; 28e; 31e; 36a, 36b, 36c) von einer jeden von den Schneidkantespitzen (21; 26; 28; 31; 35) mit Teilen (23; 27; 29) ausgestattet sind, die parallel zueinander sind, oder mit Teilen (32; 36c), die so geneigt sind, dass sie auseinanderweichen, während sie in einer zu einer Schneidkante von der Schneidkantespitze (21; 26; 28; 31; 35) entgegengesetzten Richtung verlaufen; wobei die beiden Seitenflächen (21e; 26e; 28e; 31e; 36a, 36b, 36c) einen radialen Seitenflächen-Freiwinkel oder einen tangentialen Seitenflächen-Freiwinkel aufweisen, und die Schneidkantespitzen (21; 26; 28; 31; 35) mit den Zähnen (13) verschweißt sind, wobei die parallelen Teile (23; 27; 29) oder die geneigten Teile (32; 36c) durch ein Klemmelement eingespannt sind.

2. Verfahren zum Herstellen eines bestückten Kreissägeblattes nach Anspruch 1, wobei der Hartbeschichtungsfilm (24) eine Oxidationsausgangstemperatur von 800 Grad Celsius oder mehr aufweist.

3. Verfahren zum Herstellen eines bestückten Kreissägeblattes nach Anspruch 2, wobei der Hartbeschichtungsfilm (24) durch eine physikalische Gasphasenabscheidung beschichtet wird.

4. Verfahren zum Herstellen eines bestückten Kreissägeblattes nach einem der Ansprüche 1 bis 3, wobei die Metallbasis eine Dicke von 3,7 X (1/10⁵) X D² [mm] oder weniger aufweist, wobei D ein Durchmesser [mm] des Basismetalls ist.

## Revendications

1. Procédé de fabrication d'une lame de scie circulaire à pointes, comprenant une première étape de formation d'une base métallique en forme de disque (11) en acier, une deuxième étape de production de pointes à bords coupants (21 ; 26 ; 28 ; 31 ; 35), une troisième étape de revêtement d'au moins des bords coupants des pointes à bords coupants (21 ; 26 ; 28 ; 31 ; 35) avec un film de revêtement dur (24), et une quatrième étape de fixation des pointes à bords coupants (21 ; 26 ; 28 ; 31 ; 35) revêtues du film de revêtement dur (24) par soudage à des dents (13) formées sur la base métallique (11), le film de revêtement dur (24) étant en un matériau sélectionné à partir du groupe constitué par un premier matériau comprenant un parmi des nitrures, des oxydes et des oxynitrures contenant au moins un parmi Al, Ti et Cr, un deuxième matériau comprenant le premier matériau contenant au moins un parmi Si, V, Ni, Y, Zr, Nb, Mo, Ta et W, un troisième matériau comprenant le premier matériau contenant au moins un parmi B et C, et un quatrième matériau comprenant le deuxième matériau contenant au moins un parmi B et C,
**caractérisé en ce qu'**une partie des deux faces latérales (21e ; 26e ; 28e ; 31e ; 36a, 36b, 36c) de chacune des pointes à bords coupants (21 ; 26 ; 28 ; 31 ; 35) sont pourvues de parties (23 ; 27 ; 29) parallèles entre elles ou de parties (32 ; 36c) inclinées pour s'écarter les unes des autres quand elles vont dans une direction opposée à un bord coupant de la pointe à bords coupants (21 ; 26 ; 28 ; 31 ; 35), dans lequel les deux faces latérales (21e ; 26e ; 28e ; 31e ; 36a, 36b, 36c) ont un angle de dégagement radial de face latérale ou un angle de dégagement tangentiel de face latérale, et les pointes à bords coupants (21 ; 26 ; 28 ; 31 ; 35) sont soudées aux dents (13) avec les parties parallèles (23 ; 27 ; 29) ou les parties inclinées (32 ; 36c) pincées par un élément de serrage.

2. Procédé de fabrication d'une lame de scie circulaire à pointes selon la revendication 1, dans lequel le film de revêtement dur (24) a une température de début d'oxydation de 800 degrés Celsius ou plus.

3. Procédé de fabrication d'une lame de scie circulaire à pointes selon la revendication 2, dans lequel le film de revêtement dur (24) est appliqué en revêtement par un processus de dépôt physique en phase vapeur.

4. Procédé de fabrication d'une lame de scie circulaire à pointes selon l'une quelconque des revendications 1 à 3, dans lequel le métal de base a une épaisseur de 3,7 x (1/10⁵) x D² [mm] ou moins, où D est un diamètre [mm] du métal de base.
